# EUROPEAN PATENT APPLICATION

(11) **EP 1 942 046 A2**
(43) Date of publication of application: **09.07.2008**
(21) Application number: 07025243.2
(22) Date of filing: 31.12.2007
(51) Int. Cl.: B62D 57/00, B60B 19/14, B60B 33/08, B60K 7/00

(54) **Drive type of spherical roller**

(30) Priority: 05.01.2007 JP 2007000848
(71) Applicant: NIKKO Co., Ltd., Tokyo (JP)
(72) Inventor: Koike, Tomohiko, Tokyo (JP)
(74) Representative: Möhring, Friedrich

(57) **Abstract**

To provide a spherical roller which is capable of fully rotating when moving on a rough road surface with a small contact area and which produces no obstacle to the movement in other portions.
The present invention comprises a spherical roller (1) in a globular form, a housing (6) on the undersurface of which an opening (4) in a circular form is provided in such a way that the spherical roller is projected in a horizontal down direction, a support roller (8) having rotatable contact with an upper side portion of the spherical roller within the housing, and a drive roller which is arranged in the housing and driven by a drive motor (10) to rotate the spherical roller in a direction at an angle of 90 degrees different from the direction in which the support roller rotates from immediately above for friction drive, thereby driving the spherical roller to move the housing.

## Description

### Technical Field

The present invention relates to a spherical roller, and particularly to a spherical roller which can be driven.

### Background Art

A spherical roller is being used as a structural member of a bearing or a pen point of a ballpoint pen. In addition, the spherical roller may be used as a device for detecting the amount of rotation like Japanese Unexamined Patent Publication No. 3(1991-27732).

### Disclosure Of The Invention

Incidentally, a spherical roller can be used as a tire or a roller by being attached to the bottom surface of a shaft portion such as a foot portion of a robot. Particularly, the spherical roller can be rotated in various directions without changing the direction of the roller and thus is excellent in having a degree of freedom in comparison with the tire rotating in one direction.

However, the spherical roller did not always have a full rolling capability when moving on a rough road surface with a small contact area. More specifically, the spherical roller produced an obstacle to the movement in other portions because it did not rotate during the movement.

Hence, an object of the present invention is to provide a spherical roller which is capable of fully rotating when moving on a rough road surface with a small contact area and which produces no obstacle to the movement in other portions.

The drive type of spherical roller according to the present invention comprises a spherical roller in a globular form, a housing on the undersurface of which an opening in a circular form is provided in such a way that the spherical roller is projected in a horizontal down direction, a support roller having rotatable contact with an upper side portion of the spherical roller within the housing, and a drive roller which is arranged in the housing and driven by a drive motor to rotate the spherical roller in a direction at an angle of 90 degrees different from the direction in which the support roller rotates from immediately above for friction drive, thereby driving the spherical roller to move the housing.

Furthermore, the drive motor is integrated with the drive roller and may have a shift motor to which a pinion gear is attached such that the drive roller can move around a position in contact with the spherical roller and a position spaced from the spherical roller and a rack which is engaged with the pinion gear and moved by the rotation of the pinion gear.

In addition, the spherical roller may be plurally arranged in the housing. Moreover, the plural spherical rollers are characterized by being serially arranged along the direction in which the drive roller rotates.

Furthermore, the plural spherical rollers are characterized by rotating in complete synchronization with each other.

### [Effects of the Invention]

The drive type of spherical roller according to the present invention comprises a spherical roller in a globular form, a housing on the undersurface of which an opening in a circular form is provided in such a way that the spherical roller is projected in a horizontal down direction, a support roller having rotatable contact with an upper side portion of the spherical roller within the housing, and a drive roller which is arranged in the housing and driven by a drive motor to rotate the spherical roller in a direction at an angle of 90 degrees different from the direction in which the support roller rotates from immediately above for friction drive, thereby driving the spherical roller to move the housing. This provides the spherical roller capable of fully rotating when moving on a rough road surface with a small contact area, producing no obstacle to the movement in other portions.

Furthermore, the drive motor is integrated with the drive roller and has a shift motor to which a pinion gear is attached such that the drive roller can move around a position in contact with the spherical roller and a position spaced from the spherical roller, and a rack which is engaged with the pinion gear and moved by the rotation of the pinion gear, whereby, when driven in the direction of travel, the spherical roller is driven by the drive motor and when driven in a direction different from the direction of travel, the drive motor is integrated with the drive roller and spaced from the position in contact with the spherical roller and the spherical roller, thereby enabling a rolling in a free direction.

In addition, the spherical roller is plurally arranged in the housing, thereby making it possible to more powerfully drive the spherical roller.

Moreover, the plural spherical rollers are serially arranged along the direction in which the drive roller rotates, thereby making it possible to concentrate their driving force in the same direction.

Subsequently, the plural spherical rollers are characterized by rotating in complete synchronization with each other, whereby the same force is simultaneously transmitted to the plural spherical rollers.

### Brief Descriptions Of Drawings

FIG. 1 is an overall inclination view of a drive type of spherical roller of the embodiment according to the present invention.
FIG. 2 is a side view of a drive type of spherical roller of the embodiment according to the present invention.
FIG. 3 is a side view of a drive type of spherical roller of the embodiment according to the present invention.
FIG. 4 is an overall view of a robot to which a drive type of spherical roller according to the present invention is applied.

### Best Mode For Carrying Out The Invention

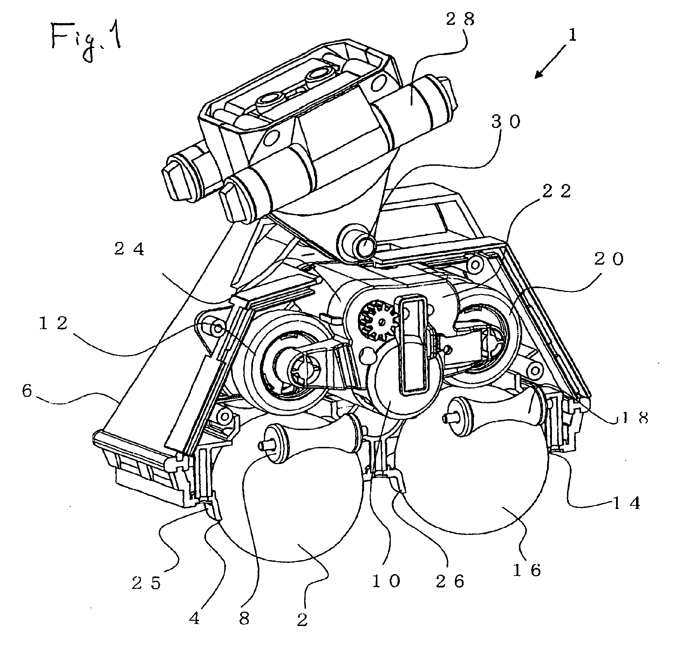

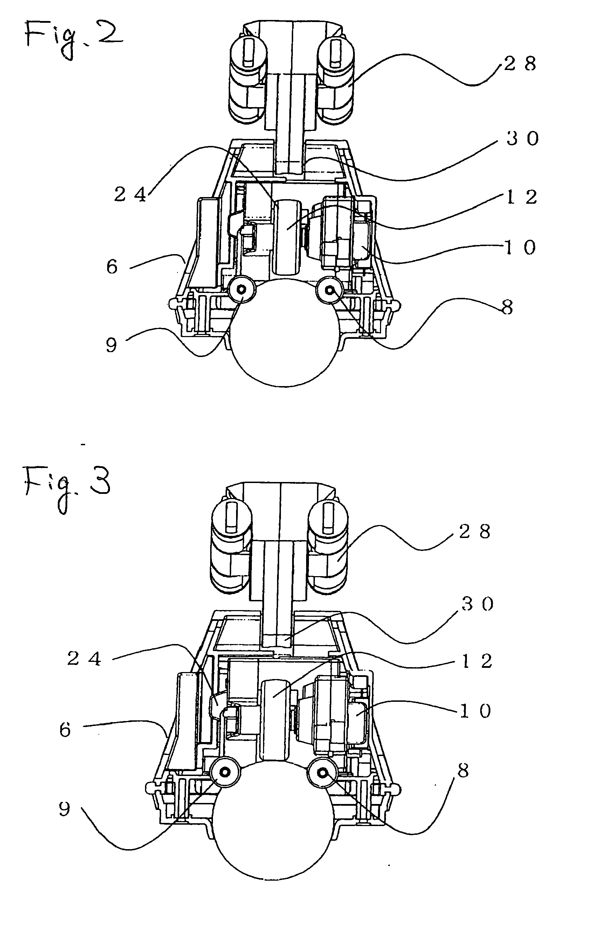

A drive type of spherical roller as the embodiment of the present invention will now be described with reference to the drawings. FIG. 1 is an overall inclined view of the drive type of spherical roller of the embodiment. FIG. 2 and FIG. 3 are side views of the drive type of spherical roller of the embodiment. FIG. 2 shows a case in which a drive roller and a spherical roller are spaced and FIG. 3 shows a case in which the drive roller and the spherical roller are in contact with each other.

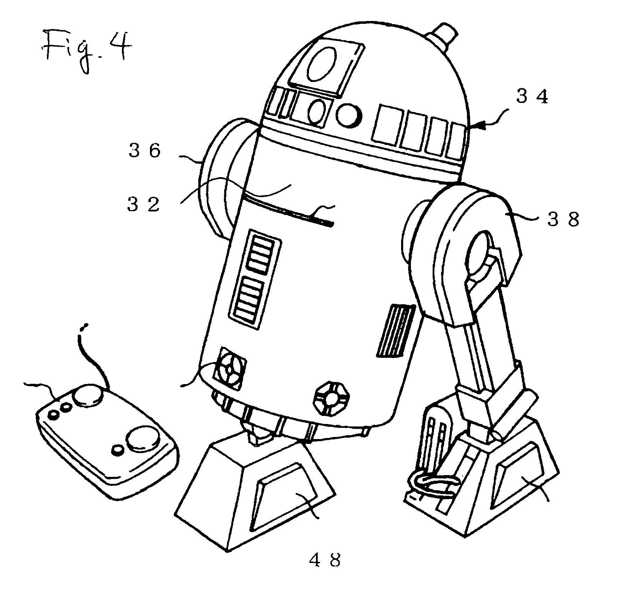

FIG. 4 is an overall view of a robot to which the drive type of spherical roller according to the present invention is applied.

First of all, the embodiment will be described with reference to FIG. 1. A drive type of spherical roller 1 as the embodiment of the present invention comprises a spherical roller 2 in a globular form, a housing 6 on the undersurface of which an opening 4 in a circular form is provided in such a way that the spherical roller 2 is projected in a horizontal down direction, a support roller 8 having rotatable contact with an upper side portion of the spherical roller 2 within the housing 6, and a drive roller 12 which is arranged in the housing 6 and driven by a drive motor 10 to rotate the spherical roller 2 in a direction at an angle of 90 degrees different from the direction in which the support roller 8 rotates from immediately above for friction drive.

The spherical roller 2 is rotatably secured from upper portions of both side surfaces by a third support roller not shown in addition to the support roller 8 provided in the housing 6. Both of the support roller 8 and the third support roller are adapted to the shape of the spherical roller 2, recessed in the center in a circle, constructed from a shape that both end portions thereof are projected, have shaft portions, and constructed so that a contour roller rotates.

In the present embodiment, a second opening 14 is further provided adjacent to a bottom portion of the housing 6, into which a second spherical roller 16 is inserted.

Incidentally, the openings 4 and 14 have support ribs 25 and 26 for supporting the spherical roller 2 and the second spherical roller 16 in their inner peripheries.

The second spherical roller 16 is supported by a second support roller 18 which is projected from the housing 6 and rotatably brought into contact therewith from the side direction. The second spherical roller 16 is also rotatably supported by a fourth support roller which is projected from the housing 6 and which is not shown, but brought into contact therewith from the other side direction. The second support roller 18 and the fourth support roller are constructed from a shape that they are recessed in the center in a circle and both end portions thereof are projected in accordance with the shape of the second spherical roller 16.

The second spherical roller 16 is further brought into contact with and supported by a second drive roller 20 from immediately above.

Here, the second drive roller 20 is held together with the drive roller 12 by a drive roller support portion 22. The drive roller support portion 22 incorporates the drive motor 10 and a shift motor 24 therein, supports the drive roller 12 pivotally at one end portion of the drive roller support portion 22, and supports the second drive roller 20 pivotally at the other end portion thereof, in which the drive roller 12 and the second drive roller 20 are serially arranged in the direction of travel.

Both of the drive roller 12 and the second drive roller 20 are linked in a chain or a gear and driven by the drive motor 10 incorporated in the drive roller support portion 22. More specifically, the drive motor 10 allows the spherical roller 2 and the second spherical roller 16 to be driven in synchronization with each other through each of the drive roller 12 and the second drive roller 20.

Meanwhile, the drive roller support portion 22 is provided with the shift motor 24, a pinion gear provided in the shift motor 24, and a rack gear provided in the housing 6 so as to be able to move up and down a position in contact with the spherical roller 2 and the second spherical roller 16 and a position not in contact therewith in the housing 6.

Incidentally, the housing 6 is pin-coupled by an upper portion body 28 and a pin 30.

Subsequently, the operation of the present invention will be described with reference to FIGS. 2 and 3.

FIG. 2 shows a non-contact state where the drive type of spherical roller 1 according to the present invention has a space between the drive roller 12 and the spherical roller 2. In this state, the spherical roller 2 is not restricted by the drive roller 12. This enables the spherical roller 2 to rotate freely in all directions.

However, the driving force is not transmitted, so that the spherical roller 2 may not rotate in case where a fault requires the driving force.

On the other hand, FIG. 3 shows a contact state where the drive type of spherical roller 1 according to the present invention has no space between the drive roller 12 and the spherical roller 2. In this state, the spherical roller 2 is restricted by the drive roller 12. More specifically, this state is the one used for the case of the movement to the straight line direction to connect the spherical roller 2 and the second spherical roller 16. Furthermore, the driving force is increased because the spherical roller 2 and the second spherical roller 16 are driven by the drive motor 10, the drive roller 12, and the second drive roller 20. For example, even if there is some unevenness of the floor surface or an obstacle to the drive, it becomes easier to rotate and drive the spherical roller 2 and the second spherical roller 16.

Subsequently, an overall view of a robot to which the present invention is applied is shown in FIG. 4.

In the robot according to the present invention, a head portion 34 which is semi-spherical and includes a projection lens is rotatably arranged on an upper portion of a torso 32 which is a cylinder-shaped frame portion on the longitudinal direction.

The projection lens is arranged so as to be exposed from an opening opened to one side of the head portion 34 which is semi-spherical and is set so as to be capable of changing the elevation angle in the vertical direction to the opening. In the projection lens, the elevation angle is controlled by a lens motor portion (not shown).

In addition, the head portion 34 itself is rotatably set at an angle of 360 degrees to the torso 32. The head portion 34 is rotated and controlled by a head motor drive portion (not shown).

Furthermore, rotatable arm portions 36 and 38 are arranged on the horizontal axis of a shoulder portion perpendicular to the torso 32. The arm portions 36 and 38 are driven by a right shoulder motor (not shown) and a left shoulder motor (not shown) which are connected to a shoulder motor drive portion (not shown).

Hand portions 44 and 46 (not shown) incorporating wheels 40 and 42 (not shown) are provided at the ends of the arm portions 36 and 38. The wheels 40 and 42 are driven by a right hand motor (not shown) and a left hand motor (not shown) which are connected to a hand and foot motor drive portion (not shown).

In addition, a foot portion 48 is arranged on the underside of the torso 32. The drive type of spherical roller 1 according to the present invention is coupled to the foot portion 48 by the pin 30.

Here, when the wheels 40 and 42 go forward and backward, the state of FIG. 3 is set in which the drive roller 12 and the spherical roller 2 have no space and are brought into contact with each other. Particularly, even if an obstacle to travel occurs when the foot portion 48 is at the head to the direction of travel, the driving force allows the foot portion 48 to travel.

On the other hand, if the wheel 40 goes forward and the wheel 42 goes backward, the state of FIG. 2 is set in which the drive roller 12 and the spherical roller 2 are spaced. In this case, because the movement in the lateral direction instead of in the serial direction with respect to the spherical roller 2 and the second spherical roller 16 occurs, the spherical roller 2 and the second spherical roller 16 are required to rotate in a free direction. Thus, they are required to be released from restriction by the drive roller or the like.

## Claims

1. A drive type of spherical roller comprising:
a spherical roller in a globular form;
a housing on the undersurface of which an opening in a circular form is provided in such a way that the spherical roller is projected in a horizontal down direction;
a support roller having rotatable contact with an upper side portion of the spherical roller within the housing; and
a drive roller which is arranged in the housing and driven by a drive motor to rotate the spherical roller in a direction at an angle of 90 degrees different from the direction in which the support roller rotates from immediately above for friction drive;
thereby driving the spherical roller to move the housing.

2. The drive type of spherical roller according to claim 1, **characterized in that** the drive motor is integrated with the drive roller and has a shift motor to which a pinion gear is attached such that the drive roller can move around a position in contact with the spherical roller and a position spaced from the spherical roller and a rack which is engaged with the pinion gear and moved by the rotation of the pinion gear.

3. The drive type of spherical roller according to claim 1 or 2, **characterized in that** the spherical roller is plurally arranged in the housing.

4. The drive type of spherical roller according to claim 3, **characterized in that** the plural spherical rollers are serially arranged along the direction in which the drive roller rotates.

5. The drive type of spherical roller according to claim 4, **characterized in that** the plural spherical rollers rotate in complete synchronization with each other.
